# EUROPÄISCHE PATENTSCHRIFT

(11) **EP 0 854 411 B1**
(45) Veröffentlichungstag und Bekanntmachung des Hinweises auf die Patenterteilung: **02.05.2003**
(21) Anmeldenummer: 98100134.0
(22) Anmeldetag: 07.01.1998
(51) Int. Cl.: G06F 1/16, A45C 5/12

(54) **Computerkoffer**
Computer carrying case
Malette de transport pour ordinateur

(30) Priorität: 10.01.1997 DE 19700562
(43) Veröffentlichungstag der Anmeldung: 22.07.1998
(73) Patentinhaber: Consel Kofferlösungen GmbH, 35428 Langgöns (DE)
(72) Erfinder: Harfst, Karl-Hermann, 35428 Langgöns-Niederkleen (DE)
(74) Vertreter: Blumbach, Kramer & Partner GbR

(56) Entgegenhaltungen:
- DE-U- 9 203 170
- DE-U- 9 208 191
- US-A- 5 287 245

## Beschreibung

Die Erfindung bezieht sich auf einen Koffer zur Aufnahme eines flachen elektronischen Geräts, insbesondere eines Computer-Notebooks, das Schnittstellenzugänge an den Schmalseiten aufweist.

Computerkoffer dienen zum Schützen des Computers während der Reise und beherbergen häufig Zusatzgeräte, wie Drucker und Netzteile der Stromversorgung. Während man den Computer prinzipiell aus dem Koffer herausheben kann, ist es doch wünschenswert, den Computer im Unterteil des Koffers während des Arbeitens zu belassen. Dabei tritt jedoch der Nachteil ein, daß die Schaumstoffeinlage die Schmalseiten des Computers teilweise bedeckt und deshalb die Zugänglichkeit zu den Schnittstellenzugängen des Computers behindert.

Ein vorbekannter Kommunikations-Aktenkoffer (DE 92 08 191 U1) enthält diverse Geräte, darunter einen Kleincomputer, der mittels einer Hebevorrichtung unter Benutzung von Zahnstangen und Zahnsegmenten angehoben werden kann. Die Hebevorrichtung enthält einen integrierten Sammelsteckblock, der mit einer Sammelanschlussleiste im Koffer für externe Kabelverbindungen zusammenarbeitet. Die Bedienbarkeit der Schnittstellenzugänge an den Schmalseiten des Computers ist somit auf konstruktiv aufwendige Art und Weise gelöst worden.

Der Erfindung liegt die Aufgabe zugrunde, einen Computerkoffer zu schaffen, der durch einfache Handhabung die Schnittstellenzugänge an den Schmalseiten des Computers freilegt.

Die gestellte Aufgabe wird aufgrund der Merkmale des Anspruchs 1 gelöst und durch die weiteren Maßnahmen der Unteransprüche ausgestaltet und weiterentwickelt.

Im einzelnen ist wenigstens ein Hubzylinder zwischen dem Unterteil des Koffergehäuses und dem Computer vorgesehen, und der Hubzylinder kann zwei Stellungen einnehmen, und zwar eine eingefahrene Stellung, bei der der Hubzylinder in der Wandung der Schaumstoffeinlage verschwindet, und eine ausgefahrene Stellung, bei der der Hubzylinder den Computer so weit anhebt, daß die Schnittstellen des Computers, wie diverse Stecker, Diskettenlaufwerk, CD-ROM-Laufwerk und dergleichen zugänglich werden. Im allgemeinen verwendet man drei oder vier Hubzylinder pro Computer. Wenn man die Hubzylinder nahe der Hinterkante des Computers ausfahren läßt, erzielt man eine Neigung des Tastenfeldes des Computers, wie es aus ergonomischen Gründen erwünscht ist. Durch Betätigung aller Hubzylinder kann man auch die Vorderkante des Computers anheben und somit die Schmalseiten des Computers aus den Schaumstoffumkleidungen völlig herausheben.

Herzstück des Hubzylinders ist ein Führungskörper mit Führungsnut, in die das vordere Ende eines Kupplungsstiftes eingreift, der zwei Raststellen vorfindet, die sich nahe des unteren und oberen Endes des Führungskörpers befinden. Der Kupplungsstift sitzt in einem Schwenkarm, der eine gewisse Stützlänge darstellt. Führungskörper und Schwenkarm überdecken einander in der eingefahrenen Stellung des Hubzylinders, während in der ausgefahrenen Stellung der Schwenkarm sich weitgehend außerhalb der Überdeckungsstellung befindet, so daß eine Stützkonstruktion gebildet wird, die zwei unterschiedliche Längen aufweist. Die kürzere Länge bedeutet: Der Hubzylinder ist eingefahren, während die größere Länge der Stützkonstruktion bei der ausgefahrenen Stellung des Hubzylinders angetroffen wird.

Weitere Einzelheiten der Erfindung werden anhand der Zeichnung beschrieben. Dabei zeigt:
- Fig. 1: eine perspektivische Darstellung einer Schaumstoffeinlage in einem Kofferunterteil,
- Fig. 2: eine perspektivische Darstellung zweier Hubzylinder im eingefahrenen und ausgefahrenen Zustand,
- Fig. 3: einen vergrößerten Schnitt durch einen Hubzylinder und
- Fig. 4: eine Draufsicht auf einen Führungskörper.

Ein Computerkoffer enthält gewöhnlich ein Unterteil 1, das schematisch durch strichpunktierte Linien angedeutet ist, und ein nicht dargestelltes Oberteil. In beiden befinden sich Schaumstoffeinlagen, um den flachen Computer eng zu umgreifen und beim Transport möglichst vor Stößen zu bewahren. Die bei 2 dargestellte Schaumstoffeinlage des Unterteils 1 ist also an das individuelle elektronische Gerät angepaßt. Wie ersichtlich, gibt es einen Aufnahmeraum 3 für ein Computer-Notebook und einen Raum 4 für einen Drucker. Das Netzteil ist in einem Raum 5 untergebracht, der sich in einer Schicht unterhalb des Raums 3 erstreckt. Die Räume 3, 4 und 5 sind über ein Bandkabel 6 miteinander verbunden. Eine Belüftung ist bei 7 angedeutet. Die seitlichen Wände 8 haben etwas unregelmäßige Form und sind auch teilweise mit Durchbrüchen 9 versehen, die jedoch nicht ausreichen, Zugang zu allen Schnittstellen des Computer-Notebooks zu gewähren. Hier setzt die Erfindung ein.

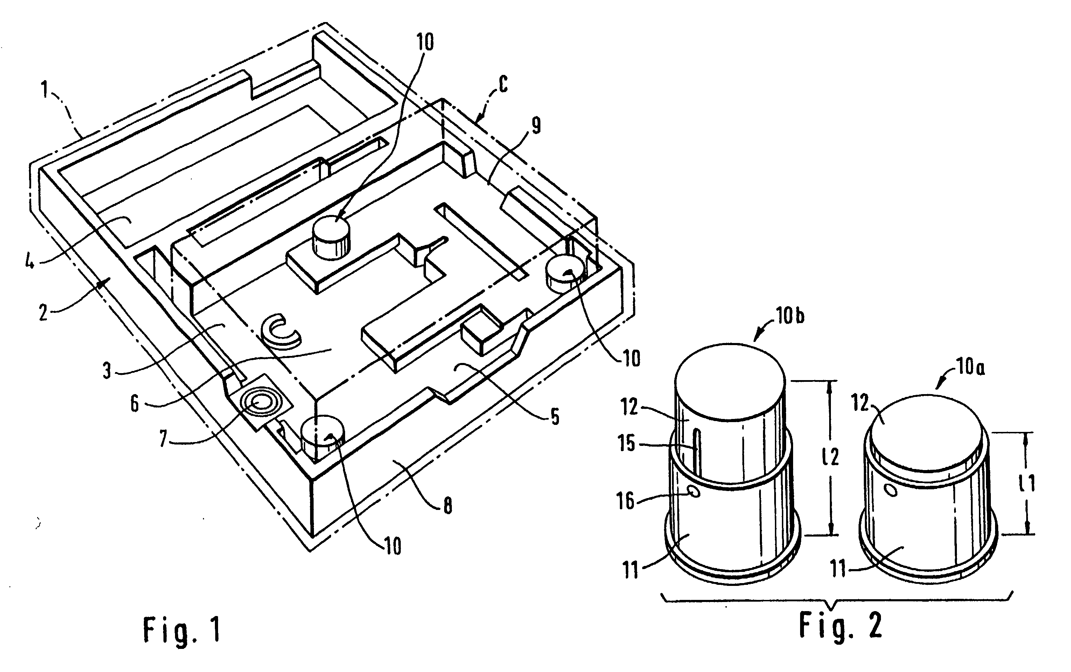

Es ist eine Hubanordnung, bestehend im vorliegenden Fall aus drei Hubzylindern 10, vorgesehen, die manuell betätigt werden können, um eine eingefahrene Stellung 10a bzw. eine ausgefahrene Stellung 10b (Fig. 2) einzunehmen. Die Hubzylinder 10 sind so flach gebaut, daß sie in der eingefahrenen Stellung in der Schaumstoffeinlage 2 verschwinden, während ihre Ausfahrlänge genügend ist, den in Fig. 1 bei C angedeuteten Computer anzuheben, um seine an den Schmalseiten angebrachten Schnittstellen zugänglich zu machen. Das Verhalten der Hubzylinder gleicht dem von Wechselschaltern, d. h. bei manueller Druckbetätigung nimmt jeder Hubzylinder wechselweise die Stellungen 10a und 10b ein.

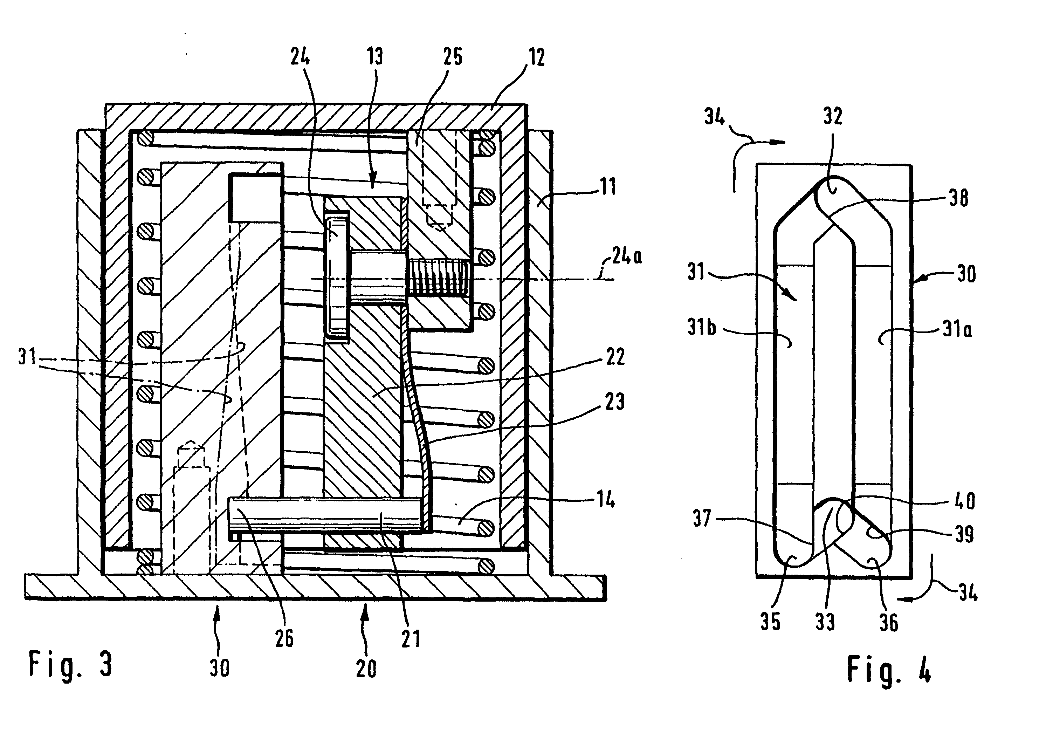

Fig. 3 zeigt einen Schnitt durch einen Hubzylinder. Dieser enthält einen Zylinder 11 zur Befestigung am Kofferboden 1, einen topfförmigen Kolben 12 in Berührung mit der Unterseite des Computer-Notebooks und eine Betätigungs-Schalteinrichtung 13 zur Herbeiführung der beiden Stellungen 10a und 10b. Im einzelnen enthält die Betätigungs-Schalteinrichtung 13 eine Druckfeder 14, welche den Zylinder 11 und den Kolben 12 gegeneinander zu spreizen versucht, wobei die Ausfahrlänge durch einen Schlitz 15 im Kolben 12 (Fig. 2) begrenzt wird, in welchen das vordere Ende einer Stiftschraube 16 eingreift, die in einer Querbohrung des Zylinders 11 eingeschraubt ist. Zylinder 11 und Kolben 12 sind somit unverlierbar aneinander gehalten, und der Kolben 12 kann sich beim Ausfahren nicht drehen, was sonst wegen der als Druckfeder 14 benutzten Schraubenfeder der Fall wäre.

Die Betätigungs-Schalteinrichtung 13 bildet eine Stützkonstruktion je vorbestimmter Länge 11 bzw. 12, wie sie der eingefahrenen Stellung 10a bzw. der ausgefahrenen Stellung 10b entspricht. Um diese unterschiedlichen Längen zu realisieren, erstrecken sich zwei längliche Stützteile, nämlich ein Führungsnutkörper 30 und eine Nachführeinrichtung 20 nebeneinander, entweder in Überdeckung für die Stellung 10a oder weitgehend gegeneinander verschoben für die Stellung 10b. Die Verbindung der beiden Stützteile 20, 30 erfolgt über einen Kupplungsstift 21. Dieser sitzt frei beweglich in einer Querbohrung eines Schwenkarms 22 und wird durch eine am Schwenkarm 22 angeschraubte Blattfeder 23 in Richtung des Führungskörpers 30 gedrängt. Der Schwenkarm 22 ist mittels einer Zapfenschraube 24 an einem Halter 25 befestigt und gleichzeitig um eine Schwenkachse 24a drehbar gelagert. Der Halter 25 ist am Kolbenboden angeschraubt. Somit wird die Nachführeinrichtung 20 mit dem Kolben 12 mitgeführt, während der Führungsnutkörper 30 mit dem Zylinder 11 mitgeführt wird, an dessen Boden er angeschraubt ist.

Der Führungsnutkörper 30 weist eine Führungsnut 31 auf, deren Breite dem vorderen Eingreifende 26 des Kupplungsstifts 21 entspricht und die (Fig. 4) eine obere Raststelle 32 sowie eine untere Raststelle 33 bestimmt. Wie ersichtlich, weist die Führungsnut 31 zwei Zweige 31a und 31b auf und bildet eine geschlossene, langgezogen-herzförmige Bahn mit Spitze nach oben. Es wird dafür gesorgt, daß das Eingreifende 26 des Kupplungsstiftes 21 nur in einer Durchlaufrichtung, wie durch Pfeil 34 angedeutet, die Bahn durchläuft. Dadurch wird erreicht, daß bei der unteren Raststelle 33 der Stift nicht mehr in diese Raststelle 33 zurückrutscht, wenn das Eingreifende 26 die eine untere Stelle 35 der Bahn erreicht hat. Von dort aus wandert das Eingreifende mit Federkraft zur oberen Raststelle 32, und wenn man den Kolben 12 niederdrückt, entlang des Zweiges 31a zur weiteren unteren Stelle 36, von wo aus die Federkraft den Stift in die Raststelle 33 verschiebt. In der Raststelle 33 findet der Stift eine Anlage, so daß die Feder 14 den Kolben 12 nicht wieder nach oben schieben kann, es sei denn, der Stift wird in die Stellung 35 gebracht, von wo aus er dann infolge Federkraft weiter entlang des Zweiges 31b in die obere Raststelle 32 gelangt.

Der Durchlauf des Stiftes in der angegebenen Richtung 34 kann durch entsprechende Einwirkung auf den Schwenkarm 22 bewirkt werden, was z. B. eine entsprechende Einrichtung zur Verschwenkung des Hebels 22 nach rechts bzw. links voraussetzt, je nachdem, ob man sich nahe des oberen oder unteren Rastpunktes befindet. Eine andere Möglichkeit besteht darin, daß das Eingreifende des Stiftes 21 eine Ausbildung aufweist, welche den Durchlauf in einer Richtung fördert (Freilauf) und in der entgegengesetzten Richtung sperrt.

In dem bevorzugten Ausführungsbeispiel wird der Durchlauf des Eingreifendes 26 in Richtung des Pfeils 34 durch die Form der Nut 31 erzwungen. Die Nut weist nämlich Stufen 37, 38, 39 und 40 auf, über die das Eingreifende 26 nur in einer Richtung rutschen kann. Das Eingreifende 26 folgt deshalb dem Nutgrund, weil die Blattfeder 23 einen entsprechenden Druck auf den Stift 21 ausübt. Bei der Stufe 37 fällt der Nutpegel von 4,4 mm bei der Raststelle 33 auf 5,2 mm zur Stelle 35 ab. Im Zweig 31b steigt dann der Nutpegel allmählich auf 3,6 mm an, um bei der Stufe 38 auf 4,4 mm in der Raststelle 32 abzufallen. Im Zweig 31a wird die Nuttiefe von 4,4 mm allmählich auf 2,8 mm bei der Stufe 39 gebracht, an welcher die Nut auf 3,6 mm abfällt. Zur Raststelle 33 mit der Nuttiefe von 4,4 mm ist wiederum eine Stufe 40 vorgesehen, welche das Zurückgleiten des Stiftendes in den Zweig 31a verhindert.

Wie aus Fig. 1 ersichtlich, sind drei Hubzylinder 10 vorgesehen, wobei zwei Hubzylinder nahe der Bedienungsvorderkante des Geräts angeordnet sind, während der restliche Hubzylinder unterhalb des hinteren Endes des Computers sitzt. Durch Betätigen diese hinteren Hubzylinders kann das hintere Ende des Computers angehoben und damit die Tastatur etwas schräg gestellt werden, was dem Bedienungskomfort dient. Durch Drücken der beiden vorderen Hubzylinder nehmen diese die Stellung 10b ein, und es wird auch das vordere Ende des Computers angehoben. Damit werden die Seitenkanten des flach gebauten Computers C und damit auch dort angebrachte Anschlußbuchsen oder Stecker sowie Einführungsschlitze für Plattenlaufwerke und dergleichen zugänglich. Durch Druck auf den Computer lassen sich die Hubzylinder wieder versenken und der Koffer schließen.

Während die Kreiszylinderform der Hubeinrichtungen 10 bevorzugt wird, versteht es sich, daß auch andere geschlossene oder offene Umrißformen dieser Hubeinrichtungen möglich sind, ohne den Schutzbereich der Ansprüche zu verlassen.

## Patentansprüche

1. Koffer zur Aufnahme eines flachen elektronischen Geräts (C), insbesondere eines Computer-Notebooks, das Schnittstellenzugänge an den Schmalseiten aufweist, mit folgenden Merkmalen:
der Koffer stellt ein Gehäuse mit wenigstens einem Unterteil (1) dar;
in dem Unterteil (1) ist eine Hubanordnung vorgesehen, um das elektronische Gerät (C) anheben zu können;
**gekennzeichnet durch** folgende Merkmale:
im Unterteil (1) ist eine Schaumstoffeinlage (2) vorgesehen, um Lücken zwischen elektronischem Gerät (C) und Unterteil (1) passend auszufüllen;
die Hubanordnung umfasst wenigstens einen Hubzylinder (10), der geschlossene oder offene Zylinder-Umrissformen aufweisen kann, in die Schaumstoffeinlage (2) eingebettet ist und manuell betätigbar ist, um nach Art eines Wechselschalters eine eingefahrene Stellung (10a), in der der Hubzylinder (10) in der Schaumstoffeinlage (2) verschwindet, und eine ausgefahrene Stellung (10b) einzunehmen, in welcher wenigstens eine Schmalseite des flachen Gerätes (C) zugänglich wird;
jeder Hubzylinder (10) umfasst ein mit dem Unterteil (1) zusammenarbeitendes Führungselement (11) und ein mit der Unterseite des elektronischen Geräts zusammenarbeitendes geführtes Element (12), wobei diese Elemente (11, 12) die geschlossene oder offene Zylinder-Umrissform aufweisen, ferner umfasst jeder Hubzylinder (10) eine Betätigungsschalteinrichtung (13) als Antriebseinrichtung, welche bei Betätigung den Hubzylinder (10) wechselweise in seine eingefahrene Stellung mit kurzer Stützlänge (L1) und seine ausgefahrene Stellung mit großerStützlänge (L2) bringt.

2. Koffer nach Anspruch 1 mit folgender Ausbildung der Betätigungsschalteinrichtung (13):
ein Federelement (14), welches das Führungselement (11) und das geführte Element (12) voneinander drängt;
ein Führungsnutkörper (30) zur Führung eines Kupplungselements (21);
eine Nachführeinrichtung (20) für das Kupplungselement;
der Führungsnutkörper (30) ist am Führungselement (11) oder am geführten Element (12) befestigt, während die Nachführeinrichtung (20) an dem jeweils anderen Element - geführtes Element oder Führungselement - beweglich angebracht ist;
der Führungsnutkörper (30) weist eine Führungsnut (31) mit einer oberen (32) und einer unteren (33) Raststelle für das Kupplungselement (21) auf, wobei der Führungsnutkörper (30), das Kupplungselement (21) und die Nachführeinrichtung (20) eine Stützkonstruktion entweder mit einer kurzen Stützlänge (L1) oder mit einer größeren Stützlänge (L2) bilden;
bei Druckausübung auf das Federelement (14) ist das Kupplungselement (21) aus der jeweiligen Raststelle (32, 33) herausbewegbar, wonach das Kupplungselement (21) zur jeweils anderen Raststelle (33 oder 32) gelangt, um dort einzurasten, und zwar von der oberen Raststelle (32) zur unteren Raststelle (33) gegen die Kraft des Federelements (14) und von der unteren zur oberen Raststelle mit der Kraft des Federelements.

3. Koffer nach Anspruch 2,
**dadurch gekennzeichnet, daß** die Nachführeinrichtung (20) einen Schwenkarm (22) zum Halten des Kupplungselements (21) aufweist, daß das Kupplungselement (21) als Kupplungsstift ausgebildet ist und daß der Schwenkarm (22) an einem Halter (25) befestigt ist, der seinerseits an dem geführten Element (12) oder dem Führungselement (11) befestigt ist.

4. Koffer nach Anspruch 2 oder 3,
**dadurch gekennzeichnet, daß** die Führungsnut (31) eine geschlossene, langgezogen-herzförmige Bahn mit Spitze nach oben bildet und daß Mittel vorgesehen sind, welche den Umlauf des Kupplungselements (21) in einer Durchlaufrichtung (34) der Führungsnut (31) bewirken.

5. Koffer nach Anspruch 4,
**dadurch gekennzeichnet, daß** die vorgenannten Mittel aus einem Tiefenprofil der Führungsnut (31) im Zusammenhang mit einer Federvorspannung (23) des Kupplungselements (21) bestehen, wobei entgegen der Durchlaufrichtung der Führungsnut (31) am Nutgrund Stufen (37, 38, 39, 40) ausgebildet sind.

6. Koffer nach Anspruch 5,
**dadurch gekennzeichnet, daß** das Kupplungselement (21) als in einer Bohrung des Schwenkarms (22) lose geführter Stift ausgebildet ist, wobei das eine Ende (26) des Stiftes in die Führungsnut (31) hineinragt und das andere Ende unter der Federvorspannung einer Blattfeder (23) steht.

7. Koffer nach einem der Ansprüche 2 bis 6,
**dadurch gekennzeichnet, daß** das Federelement (14) als Schraubenfeder ausgebildet ist und daß in einem der Elemente - Führungselement (11) oder geführtes Element (12) - ein Schlitz (15) und in dem anderen Element ein darin eingreifender Stift (16) vorgesehen sind.

8. Koffer nach einem der Ansprüche 2 bis 7,
**dadurch gekennzeichnet, daß** das Führungselement einen Zylinder (11) und das geführte Element einen topfförmigen Kolben (12) darstellen, die das als Druckfeder ausgebildete Federelement (14) einschließen, dabei teleskopierend ineinander geführt sind und den Führungsnutkörper (30) sowie die Nachführeinrichtung (20) des Kupplungselements (21) gehäuseartig umschließen.

9. Koffer nach einem der Ansprüche 1 bis 8,
**dadurch gekennzeichnet, daß** drei Hubzylinder (10) im Koffergehäuse vorgesehen sind, wobei zwei Hubzylinder (10) nahe der Bedienungsvorderkante und ein Hubzylinder (10) unterhalb der Hinterkante des elektronischen Geräts angeordnet sind.

## Claims

1. A case for accommodating a flat electronic device (C), particularly a computer notebook, having interface accesses at the narrow sides, with the following features:
the case constitutes a housing with at least one bottom part (1);
a lifting device is provided in the bottom part (1) to enable the electronic device (C) to be lifted;
**characterised by** the following features:
the bottom part (1) contains a foam insert (2) in order suitably to fill gaps between the electronic device (C) and the bottom part (1);
the lifting device comprises at least one lifting cylinder (10) which may have closed or open cylindrical contour shapes, is embedded in the foam insert (2) and is manually operable in order to occupy, after the style of a selector switch, a retracted position (10a) in which the lifting cylinder (10) disappears in the foam insert (2), and an extended position (10b) in which at least one narrow side of the flat device (C) is accessible;
each lifting cylinder comprises a guide element (11) co-operating with the bottom part (1) and a guided element (12) co-operating with the underside of the electronic device, said elements (11, 12) having the closed or open cylindrical contour shape, and each lifting cylinder (10) comprises a drive device in the form of an actuation switching device (13) which, on actuation, brings the lifting cylinder (10) alternately to its retracted position with a short support length (L1) and its extended position with a large support length (L2).

2. A case according to claim 1 with the following construction of the actuation switching device (13):
a spring element (14) which forces the guide element (11) and the guided element (12) apart;
a guide groove member (30) for guiding a coupling element (21);
a tracker device (20) for the coupling element;
the guide groove member (30) is fixed on the guide element (11) or on the guided element (12) while the tracker device (20) is mounted movably on the respective other element - the guided element or the guide element;
the guide groove member (30) comprises a guide groove (31) with a top catch point (32) and a bottom catch point (33) for the coupling element (21), the guide groove member (30), the coupling element (21) and the tracker device (20) forming a support structure either with a short support length (L1) or with a larger support length (L2);
on pressure being applied to the spring element (14) the coupling element (21) is movable out of the respective catch point (32, 33), whereafter the coupling element (21) passes to the respective other catch point (33 or 32) in order to engage there, namely against the force of the spring element (14) from the top catch point (32) to the bottom catch point (33), and with the force of the spring element (14) from the bottom catch point to the top catch point.

3. A case according to claim 1, **characterised in that** the tracker device (20) comprises a pivot arm (22) for holding the coupling element (21), **in that** the coupling element (21) is constructed as a coupling pin, and **in that** the pivoting arm (22) is fixed on a holder (25) which in turn is fixed on the guided element (12) or the guide element (11).

4. A case according to claim 2 or 3, **characterised in that** the guide groove (31) forms a closed elongate heart-shaped path with the point at the top and **in that** means are provided which cause the coupling element (21) to revolve in a traverse direction (34) of the guide groove (31).

5. A case according to claim 4, **characterised in that** the said means consist of a deep profile of the guide groove (31) in conjunction with spring biasing (23) of the coupling element (21), steps (37, 38, 39, 40) being formed at the groove base in opposition to the traverse direction of the guide. groove (31).

6. A case according to claim 5, **characterised in that** the coupling element (21) is constructed in the form of a pin loosely guided in a bore in the pivoting arm (22), one end (26) of the pin projecting into the guide groove (31) and the other end being subjected to the spring biasing of a leaf spring (23).

7. A case according to any one of claims 2 to 6, **characterised in that** the spring element (14) is constructed as a coil spring and **in that** a slot (15) is provided in one of the elements comprising the guide element (11) or the guided element (12) and a pin (16) engaging therein is provided in the respective other element.

8. A case according to any one of claims 2 to 7, **characterised in that** the guide element constitutes a cylinder (11) and the guided element a pot-shaped piston (12) which enclose the spring element (14) constructed as a compression spring, are telescopically guided in one another and enclose in the form of a housing the guide groove member (30) and the tracker device (20) of the coupling element (21).

9. A case according to any one of claims 1 to 8, **characterised in that** three lifting cylinders (10) are provided in the case housing, two lifting cylinders (10) being disposed near the operating front edge and one lifting cylinder (10) being disposed beneath the rear edge of the electronic device.

## Revendications

1. Coffret pour le logement d'un appareil électronique (C) plat, notamment un bloc-notes-ordinateur, qui comporte des accès d'interface sur les petits côtés, comportant les caractéristiques suivantes :
le coffret constitue un boîtier comprenant au moins une partie inférieure (1);
dans la partie inférieure (1), il est prévu un dispositif de soulèvement, afin de pouvoir soulever l'appareil électronique (C) ;
**caractérisé par** les caractéristiques suivantes :
dans la partie inférieure (1), il est prévu une garniture en mousse (2), afin de remplir d'une manière ajustée les interstices existant entre l'appareil électronique (C) et la partie inférieure (1) ;
le dispositif de soulèvement comprend au moins un cylindre de soulèvement (10) qui comporte des formes de contour de cylindre fermées ou ouvertes, est entouré par la garniture en mousse (2) et peut être actionné manuellement, de façon à occuper, à la façon d'un commutateur va-et-vient, une position rétractée (10a), dans laquelle le cylindre de soulèvement (10) disparaît dans la garniture en mousse (2), et une position déployée (10b) dans laquelle au moins un petit côté de l'appareil (C) plat est accessible ;
chaque cylindre de soulèvement (10) comprend un élément de guidage (11), coopérant avec la partie inférieure (1), et un élément guidé (12) coopérant avec la face inférieure de l'appareil électronique, ces éléments (11, 12) présentant la forme de contour de cylindre fermée ou ouverte, chaque cylindre de soulèvement (10) comprend en outre un dispositif sélecteur d'actionnement (13) servant de dispositif d'entraînement qui, lors d'un actionnement, amène le cylindre de soulèvement (10) alternativement dans sa position rétractée, à courte longueur de soutien (L1), et sa position déployée, à grande longueur de soutien (L2).

2. Coffret suivant la revendication 1 présentant l'agencement suivant du dispositif sélecteur d'actionnement (13) :
un élément formant ressort (14) qui repousse l'élément de guidage (11) et l'élément guidé (12) à l'écart l'un de l'autre ;
un corps à rainure de guidage (30) servant à guider un élément d'accouplement (21) ;
un dispositif suiveur (20) pour l'élément d'accouplement ;
le corps à rainure de guidage (30) est fixé à l'élément de guidage (11) ou à l'élément guidé (12), tandis que le dispositif suiveur (20) est monté d'une manière mobile sur l'autre élément respectif - élément guidé ou élément de guidage - ;
le corps à rainure de guidage (30) présente une rainure de guidage (31) comportant un emplacement d'enclenchement supérieur (32) et un emplacement d'enclenchement inférieur (33) pour l'élément d'accouplement (21), le corps à rainure de guidage (30), l'élément d'accouplement (21) et le dispositif suiveur (20) formant une structure de soutien soit à courte longueur de soutien (L1), soit à plus grande longueur de soutien (L2) ;
lorsqu'une pression est exercée sur l'élément formant ressort (14), l'élément d'accouplement (21) peut être déplacé hors de l'emplacement d'enclenchement (32, 33) respectif, à la suite de quoi l'élément d'accouplement (21) parvient jusqu'à l'autre emplacement d'enclenchement (33 ou 32) respectif, afin de s'y enclencher, plus précisément de l'emplacement d'enclenchement supérieur (32) à l'emplacement d'enclenchement inférieur (33) à l'encontre de la force de l'élément formant ressort (14) et de l'emplacement d'enclenchement inférieur à l'emplacement d'enclenchement supérieur avec la force de l'élément formant ressort.

3. Coffret suivant la revendication 2, **caractérisé en ce que** le dispositif suiveur (20) comporte un bras basculant (22) servant à maintenir l'élément d'accouplement (21), **en ce que** l'élément d'accouplement (21) est réalisé sous forme d'un doigt d'accouplement et **en ce que** le bras basculant (22) est fixée à un support (25) qui est lui-même fixé à l'élément guidé (12) ou à l'élément de guidage (11).

4. Coffret suivant la revendication 2 ou 3, **caractérisé en ce que** la rainure de guidage (31) constitue une piste en forme de coeur allongé et fermée comportant une pointe vers le haut et **en ce qu'**il est prévu des moyens qui assurent le mouvement de révolution de l'élément d'accouplement (21) dans un sens de déplacement (34) de la rainure de guidage (31).

5. Coffret suivant la revendication 4, **caractérisé en ce que** les moyens précités se composent d'une forme profilée en profondeur de la rainure de guidage (31) en relation avec une précontrainte élastique (23) de l'élément d'accouplement (21), des paliers (37, 38, 39, 40) étant réalisés au fond de la rainure dans le sens opposé au sens de déplacement de la rainure de guidage (31).

6. Coffret suivant la revendication 5, **caractérisé en ce que** l'élément d'accouplement (21) est réalisé sous forme d'un doigt guidé librement dans un perçage du bras basculant (22), une première extrémité (26) du doigt pénétrant dans la rainure de guidage (31) et l'autre extrémité étant soumise à la précontrainte élastique d'un ressort à lame (23).

7. Coffret suivant l'une des revendications 2 à 6, **caractérisé en ce que** l'élément formant ressort (14) est réalisé sous forme d'un ressort hélicoïdal et **en ce qu'**il est prévu dans l'un des éléments - élément de guidage (11) ou élément guidé (12) - une fente (15) et, dans l'autre élément, un doigt (16) s'engageant dans celle-ci.

8. Coffret suivant l'une des revendications 2 à 7, **caractérisé en ce que** l'élément de guidage constitue un cylindre (11) et l'élément guidé un piston en forme de cuvette (12) qui enferment entre eux l'élément formant ressort (14) réalisé sous forme d'un ressort de compression, ces éléments sont guidés l'un dans l'autre d'une manière télescopique et entourent à la façon d'un boîtier le corps à rainure de guidage (30) et le dispositif suiveur (20) de l'élément d'accouplement (21).

9. Coffret suivant l'une des revendications 1 à 8, **caractérisé en ce qu'**il est prévu trois cylindres à soulèvement (10) dans le boîtier de coffret, deux cylindres de soulèvement (10) étant disposés près du bord avant de service et un cylindre de soulèvement (10) au-dessous du bord arrière de l'appareil électronique.
